# EUROPEAN PATENT APPLICATION

(11) **EP 2 375 207 A2**
(43) Date of publication of application: **12.10.2011**
(21) Application number: 11159010.5
(22) Date of filing: 21.03.2011
(51) Int. Cl.: F28C 1/00, F28C 3/06, F28D 21/00, F28F 17/00, F02C 7/143, F02C 7/16

(54) **Chiller condensate system**

(30) Priority: 24.03.2010 US 730334
(71) Applicant: General Electric Company, Schenectady, NY 12345 (US)
(72) Inventor: Chillar, Rahul, Atlanta, GA 30339 (US); Mestroni, Julio, Atlanta, GA 30339 (US); Hartman, Steven, Atlanta, GA 30339 (US); Upadhyay, Siddharth, 560066, Bangalore (IN)
(74) Representative: Gray, Thomas

(57) **Abstract**

The present application provides a chiller condensate system (230). The chiller condensate system (230) may include a chiller (170) that produces a flow of condensate (210), a condensate drain system (190) positioned about the chiller (170) to collect the flow of condensate (210), and a heat exchanger (240) in communication with the condensate drain system (190) for the condensate (210) to flow therethrough.

## Description

### TECHNICAL FIELD

The present application relates generally to gas turbine engines and more particularly relates to a gas turbine engine with a chiller condensate system used for cooling purposes.

### BACKGROUND OF THE INVENTION

The power output of a gas turbine engine is directly proportional to the inlet air mass flow rate. The inlet air mass depends upon the density of the inlet air and hence the temperature of the air. As such, known gas turbine engines may use a chiller system to lower the air temperature about the compressor inlet. By lowering the inlet air temperature, the density of the inlet air may be increased and the mass flow rate to the compressor may increase. The power output of the gas turbine engine thus increases due to the higher mass flow rate.

Sensible heat transfer from the inlet air to the low temperature water circulating through the chiller coils cools the inlet air. During operation of the chiller, water tends to condense on the coils due to the cooling effect. The condensate is drained and collected so as to avoid carryover downstream and into the compressor. The condensate generally is discharged to the atmosphere or otherwise disposed. The temperature of the condensate may be around about fifty (50) to about sixty (60) degrees Fahrenheit (about ten (10) to about 15.6 degrees Celsius) although other temperatures may be used. If a typical chiller system is operating at full load, the volume of the condensate may be at about 75 gallons per minute (about 284 liters per minute). Other condensate volumes may be used.

There is therefore a desire to obtain useful work from this existing condensate flow. Specifically, the use of existing condensate may improve the overall efficiency of the gas turbine engine and related equipment while still providing adequate inlet air cooling.

### SUMMARY OF THE INVENTION

The present application thus provides a chiller condensate system. The chiller condensate system may include a chiller that produces a flow of condensate, a condensate drain system positioned about the chiller to collect the flow of condensate, and a heat exchanger in communication with the condensate drain system for the condensate to flow therethrough.

The present application thus provides a chiller condensate system. The chiller condensate system may include a chiller that produces a flow of condensate, a condensate drain system positioned about the chiller to collect the flow of condensate, and a nozzle in communication with the condensate drain system for the condensate to spray therethrough.

The present application further provides a cooling tower. The cooling tower may include a chiller condensate system with a nozzle to provide a spray of condensate and a closed cooling circuit. The spray of condensate may chill the closed cooling circuit.

These and other features and improvement of the present application will become apparent to one of ordinary skill in the art upon review of the following detailed description when taken in conjunction with the several drawings and the appended claims.

### BRIEF DESCRIPTION OF THE DRAWINGS

Fig. 1 is a schematic view of a gas turbine engine.
Fig. 2 is a schematic view of a portion of chiller condensate system as is claimed herein with a condensate collection and drainage system.
Fig. 3 is a schematic view of a condensate heat exchanger system.
Fig. 4 is a schematic view of the condensate heat exchanger system used with an air conditioning system.
Fig. 5 is a schematic view of the condensate heat exchanger system used with a steam turbine condenser.
Fig. 6 is a schematic view of the condensate heat exchanger system used with a turbine compartment.
Fig. 7 is a schematic view of the condensate heat exchanger system used with an exhaust frame and bearing cooling system.
Fig. 8 a schematic view of the condensate heat exchanger system used with a nozzle cooling system.
Fig. 9 a schematic view of a condensate spray system.
Fig. 10 a schematic view of the condensate spray system used with a cooling tower.

### DETAILED DESCRIPTION

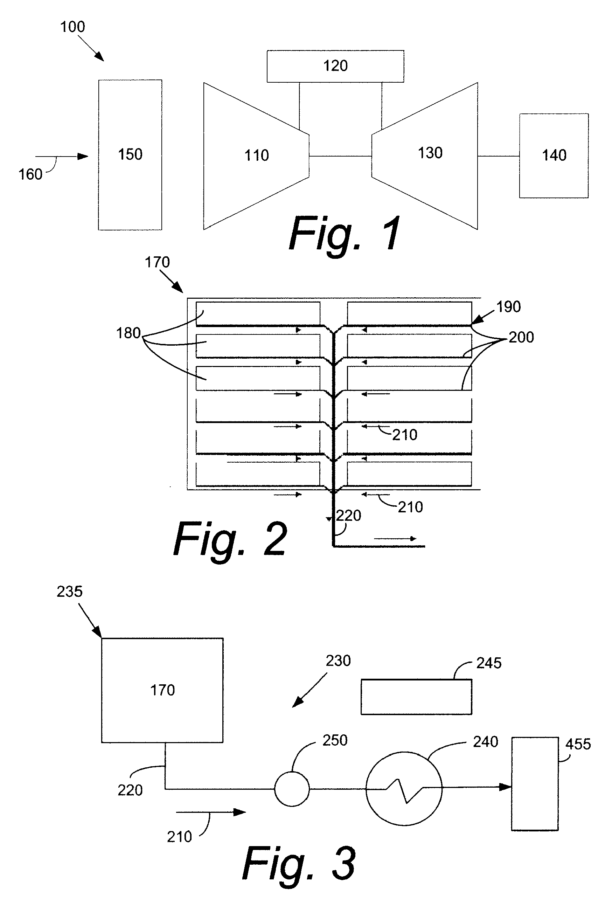

Referring now to the drawings, in which like numerals refer to like elements throughout the several views, Fig. 1 shows a schematic view of a gas turbine engine 100. As is known, the gas turbine engine 100 may include a compressor 110 to compress an incoming flow of air. The compressor 110 delivers the compressed flow of air to a combustor 120. The combustor 120 mixes the compressed flow of air with a compressed flow of fuel and ignites the mixture. Although only a single combustor 120 is shown, the gas turbine engine 100 may include any number of combustors 120. The hot combustion gases are in turn delivered to a turbine 130. The hot combustion gases drive the turbine 130 so as to produce mechanical work. The mechanical work produced in the turbine 130 drives the compressor 110 and an external load 140 such as an electrical generator and the like. The gas turbine engine 100 may use natural gas, various types of syngas, and other types of fuels. Other gas turbine engine configurations may be used herein.

The gas turbine engine 100 also may include a chiller system 150. The chiller system 150 may be positioned about the inlet of the compressor 110. As described above, the chiller system 150 chills an incoming airflow 160 to a desired temperature. Various types of chiller systems 150 are known.

Fig. 2 shows an improved chiller system 170 as is described herein. The chiller system 170 may include a number of coils 180. As described above, water flows through the coils 180 so as to chill the incoming airflow 160. The chiller system 170 also may include a condensate drain system 190. The condensate drain system may include a coil drain 200 positioned about each of the coils 180. A flow of condensate 210 passes on to each coil drain 200. The coil drain 200 may take the form of a trough or a similar structure to catch the condensate. The coil drains 200 may lead to a condensate pipe 220 or other type of central basin. As described above, the flow of condensate 210 may be at about 75 gallons per minute (about 284 liters per minute). Other condensate volumes may be used herein.

Fig. 3 shows an example of a chiller condensate system 230 as is claimed herein. In this example, the chiller condensate system 230 may be in the form of a condensate heat exchange system 235. Specifically, the condensate heat exchange system 235 includes the chiller system 170 with the condensate drain system 190. The flow of condensate 210 from the coil drains 200 is forwarded to a heat exchanger 240 by the condensate pipe 220. The heat exchanger 240 may be any type of heat exchange device including shell and tube heat exchangers, plate heat exchangers, plate and fin heat exchangers, air coils, direct contact, adiabatic heat exchangers, etc. The heat exchanger 240 exchanges heat with any type of load 245 such as an airflow, a turbine component, or other structure in a manner similar to those examples described below. A pump 250 may be positioned about the condensate pipe 220. The flow of condensate 210 may then flow to additional heat exchangers 240, discharged, or otherwise used.

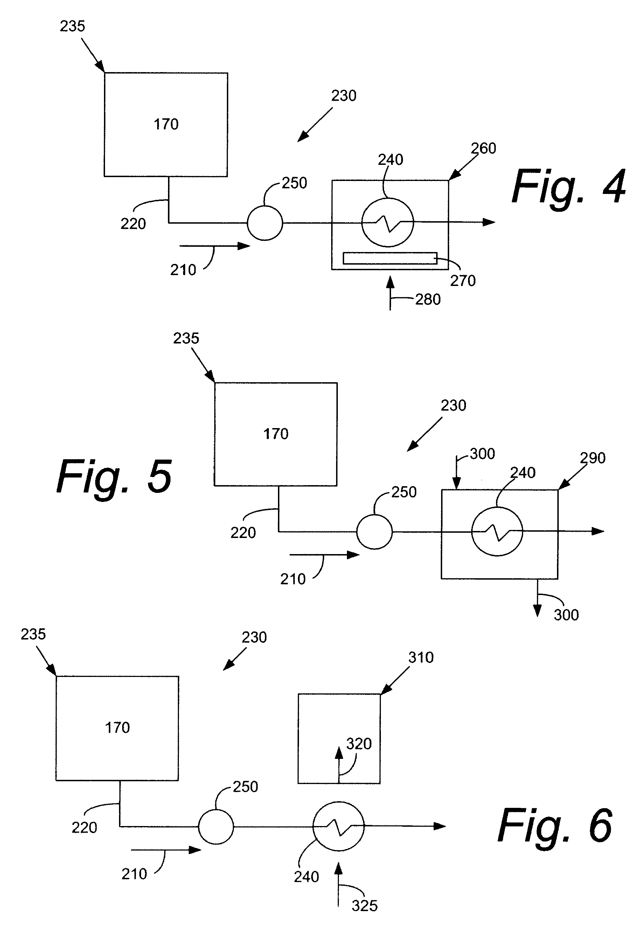

Fig. 4 shows use of the condensate heat exchanger system 235 with an example of a load 245, an air conditioning system 260. Specifically, the heat exchanger 240 of the condensate heat exchanger system 235 may be positioned about a fan 270 or other type of air movement device of the air conditioning system 260. The heat exchanger 240 may cool an air conditioning flow 280 therethrough. The condensate heat exchanger system 235 thus uses the flow of condensate 210 to provide cooling in the form of air conditioning. Moreover, the use of the condensate heat exchanger system 235 thus reduces the need for externally generated chilled water that may be used exclusively for air conditioning purposes. Other air conditioning configurations and systems may be used herein.

Fig. 5 shows the use of the condensate heat exchanger system 235 with a steam turbine condenser 290. The heat exchanger 240 thus may take the form of tubes or other types of pathways through the condenser 290. Generally described, a vacuum is maintained in the steam turbine condenser 290 by expanding a flow of steam passing through a steam pathway 300 therein. By reducing the temperature inside the condenser 290 via the heat exchanger 240, the expansion may maintain the vacuum. As such, the back pressure in the condenser 290 may be reduced. With lower back pressure, the steam may expand to a lower temperature and thus provide more output. The flow of condensate 210 also may be added to an existing ambient flow through the condenser 290. Other steam turbine condenser configurations and other structures may be used herein.

Fig. 6 shows the use of the condensate heat exchanger system 235 with a turbine compartment 310. The turbine compartment 310 may be an enclosure of any shape with turbine equipment therein. Heat from the turbine casing and other components may cause safety and lifetime issues for the equipment therein. The turbine compartment 310 thus may include a cooling air pathway 320 extending therethrough. The heat exchanger 240 of the condensate heat exchanger system 235 may be positioned about the cooling air pathway 320 or otherwise to chill an incoming flow of air 325 along the cooling air pathway 320. Alternatively, the heat exchanger 240 may be positioned about any of the specific pieces of equipment therein. Other turbine compartment configurations may be used herein.

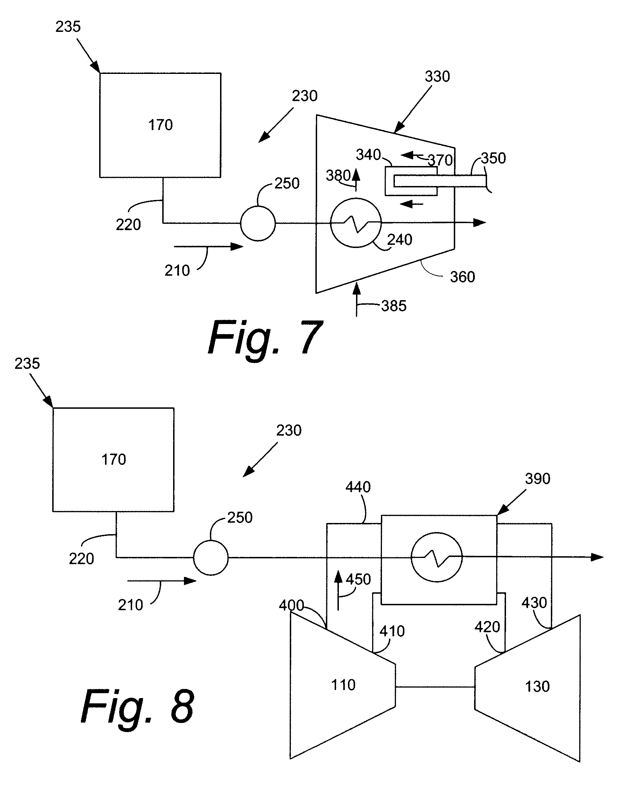

Fig. 7 shows use of the condensate heat exchanger system 235 with an exhaust frame and bearing system 330. The exhaust frame and bearing system 330 may include a bearing housing 340 supporting a rotor 350. The bearing housing 340 may be positioned within an exhaust frame 360 with a hot gas path 370 extending therethrough. The exhaust frame and bearing system 330 also may include a cooling air pathway 380 extending therethrough to cool the bearing housing 340 and the exhaust frame 360 with an incoming flow of air 385. The heat exchanger 240 of the condenser heat exchanger system 235 may be positioned about the cooling air pathway 380 to cool the incoming airflow 385. Further, the heat exchanger 240 may be positioned elsewhere within the exhaust frame and bearing system 330. Cooling may increase the lifespan of the bearing housing 340, the exhaust frame 360, and the other components therein. Other exhaust frame and bearing system configurations may be used herein.

Fig. 8 shows the use of the condensate heat exchanger system 235 with a nozzle cooling system 390. Air extracted from, for example, a ninth stage 400 and the eleventh stage 410 of the compressor 110 may be used to cool a stage three nozzle 420 and a stage two nozzle 430 of the turbine 130 via a number of extraction lines 440. The heat exchanger 240 of the condensate heat exchanger system 235 may be positioned about the extraction lines 440 so as to cool an air extraction 450 therein. Better cooling of the nozzles 420, 430 thus may increase component lifetime. The heat exchanger 240 also may be positioned elsewhere about the nozzle cooling system 390. Likewise, other types of extractions may be used. Other types of nozzle cooling configurations also may be used herein.

Referring again to Fig. 3, the chiller condensate system 230 also may be used with a fuel moisturizer 455. Fuel moisturization systems have been used in combined cycle power plants in an attempt to increase power output and thermodynamic efficiency. In such systems, natural gas is saturated with water and the moisturized fuel is heated to saturation conditions at the design gas pressure. The increased gas mass flow due to the addition of moisture may result in increased power output from gas and steam turbines. In this example, the flow of condensate 210 may be directed to the saturator 455 to saturate a flow of fuel therein. The flow of condensate 210 may flow directly to the saturator 445, exchange heat with the heat exchanger 240, or otherwise be warmed. Such moisturization may improve the overall efficiency of the gas turbine engine 100. The pump 250 also may be used herein.

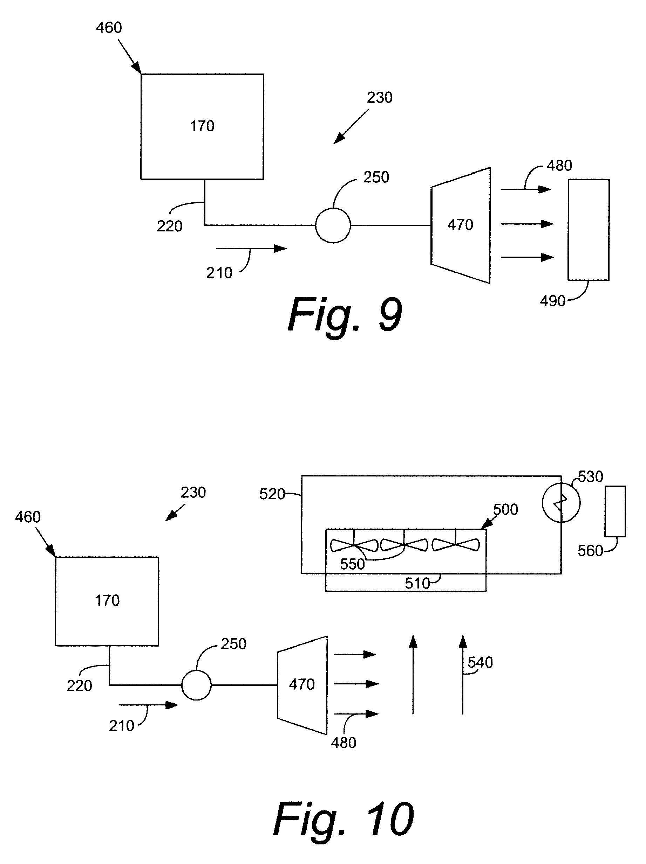

Fig. 9 shows a further example of the chiller condensate system 230. The chiller condensate system 230 may be in the form of a condensate spray system 460 as may be described herein. The condensate spray system 460 may include one or more spray nozzles 470 so as to provide a spray 480 of the condensate 210 for cooling purposes to a load 490 in a manner similar to the heat exchanger 240. The spray nozzles 470 may be any type of device that provides the spray 480 in any form. For example, the spray 480 may take the form of a mist, a stream, or any type of output. The spray nozzles 470 also may be positioned downstream of the heat exchanger 240 for use therewith. Other positions and components may be used herein. The pump 250 also may be used herein.

Fig. 10 shows the use of the condensate spray system 460 with a cooling tower 500. The cooling tower 500 may include a water tube bundle 510 extending therethrough. (Although only one water tube is shown herein, the water tube bundle 510 may have any number of tubes.) The water tube bundle 510 may be part of a closed cooling circuit 520. The closed cooling circuit 520 may include one or more heat exchangers 530. Any type of heat exchanger or heat exchange device may be used herein.

The water tube bundle 510 may be cooled by an incoming airflow 540 drawn in by a number of fans 550 or other types of air movement devices positioned within the cooling tower 500. One or more nozzles 470 of the condensate spray system 460 may be positioned about the airflow 540 so as to provide the spray 480 to the airflow 540. Cooling the airflow 540 with the spray 480 of the condensate 210 may further cool the water tube bundle 510. As such, the overall operation of the heat exchanger 530 and the closed cooling circuit 520 may be improved.

The heat exchanger 530 of the closed cooling circuit 520 may be used to cool any type of further load 560 such as a fluid flow, a component, and the like. For example, the heat exchanger 530 may be a lube oil heat exchanger, a generator heat exchanger or cooler, a steam condenser, or any type of component for heat exchange therewith. Better cooling of the lube oil may increase the lube oil life and varnishing may be avoided. Likewise, additional cooling for the generator may raise the efficiency of the generator. Similarly, better cooling of the condenser may increase output due to better expansion of the steam. Other benefits of additional (and free) cooling may be found herein.

In summary, the condensate heat exchanger system 235 and/or the condensate spray system 460 of the chiller condensate system 230 thus may be used to cool any component within the gas turbine engine 100 as well as related components such as power plant air conditioning and other types of loads 245. Such cooling provided by otherwise discarded condensate thus serves to improve the overall efficiency of the gas turbine engine system 100.

It should be apparent that the foregoing relates only to certain embodiments of the present application and that numerous changes and modifications may be made herein by one of ordinary skill in the art without departing from the general spirit and scope of the invention as defmed by the following claims and the equivalents thereof.

For completeness, various aspects of the invention are now set out in the following numbered clauses:
1. A chiller condensate system, comprising:
   a chiller;
   wherein the chiller produces a flow of condensate;
   a condensate drain system positioned about the chiller to collect the flow of condensate; and
   a heat exchanger in communication with the condensate drain system for the condensate to flow therethrough.
2. The chiller condensate system of clause 1, wherein the chiller comprises a plurality of coils.
3. The chiller condensate system of clause 1, wherein the condensate drain system comprises a plurality of coil drains and a condensate pipe.
4. The chiller condensate system of clause 1, further comprising a pump in communication with the condensate drain system.
5. The chiller condensate system of clause 1, further comprising a load in communication with the heat exchanger.
6. The chiller condensate system of clause 5, wherein the load comprises an air conditioning system.
7. The chiller condensate system of clause 5, wherein the load comprises a condenser.
8. The chiller condensate system of clause 5, wherein the load comprises a turbine compartment.
9. The chiller condensate system of clause 5, wherein the load comprises an exhaust frame and bearing system.
10. The chiller condensate system of clause 5, wherein the load comprises a nozzle cooling system.
11. The chiller condensate system of clause 5, wherein the heat exchanger comprises a spray nozzle.
12. The chiller condensate system of clause 11, wherein the load comprises a closed cooling circuit.
13. The chiller condensate system of clause 12, wherein the closed cooling circuit is in communication with a further load.
14. The chiller condensate system of clause 5, wherein the load comprises a flow of air.
15. The chiller condensate system of clause 5, wherein the load comprises a flow of steam.
16. The chiller condensate system of clause 5, wherein the load comprises a flow of fluid.
17. The chiller condensate system of clause 1, further comprising a moisturizer.
18. A chiller condensate system, comprising:
   a chiller;
   wherein the chiller produces a flow of condensate;
   a condensate drain system positioned about the chiller to collect the flow of condensate; and
   a nozzle in communication with the condensate drain system for the condensate to spray therethrough.
19. The chiller condensate system of clause 18, further comprising a load in communication with the nozzle.
20. A cooling tower, comprising:
   a chiller condensate system;
   wherein the chiller condensate system comprises a nozzle to provide a spray of condensate; and
   a closed cooling circuit;
   wherein the spray of condensate chills the closed cooling circuit.

## Claims

1. A chiller condensate system (230), comprising:
a chiller (170);
wherein the chiller (170) produces a flow of condensate (210);
a condensate drain system (190) positioned about the chiller (170) to collect the flow of condensate (210); and
a heat exchanger (240) in communication with the condensate drain system (190) for the condensate (210) to flow therethrough.

2. The chiller condensate system (230) of claim 1, wherein the chiller comprises (170) a plurality of coils (180).

3. The chiller condensate system (230) of claim 1 or 2, wherein the condensate drain system (190) comprises a plurality of coil drains (200) and a condensate pipe (220).

4. The chiller condensate system (230) of any of the preceding claims, further comprising a pump (250) in communication with the condensate drain system (190).

5. The chiller condensate system (230) of any of the preceding claims, further comprising a load (245) in communication with the heat exchanger (240).

6. The chiller condensate system (230) of claim 5, wherein the load (245) comprises an air conditioning system (260).

7. The chiller condensate system (230) of claim 5, wherein the load (245) comprises a condenser (290).

8. The chiller condensate system (230) of claim 5, wherein the load (245) comprises a turbine compartment (310).

9. The chiller condensate system (230) of claim 5, wherein the load (245) comprises an exhaust frame and bearing system (330).

10. The chiller condensate system (230) of claim 5, wherein the load (245) comprises a nozzle cooling system (390).

11. The chiller condensate system (230) of claim 5, wherein the heat (240) exchanger comprises a spray nozzle (470).

12. The chiller condensate system (230) of claim 11, wherein the load (245) comprises a closed cooling circuit (520).

13. The chiller condensate system (230) of claim 5, wherein the load (245) comprises a flow of air (280).

14. The chiller condensate system (230) of claim 5, wherein the load (245) comprises a flow of steam (300).

15. The chiller condensate system (230) of claim 5, wherein the load (245) comprises a flow of fluid (510).
